# EUROPÄISCHE PATENTANMELDUNG

(11) **EP 1 151 919 A1**
(43) Veröffentlichungstag der Anmeldung: **07.11.2001**
(21) Anmeldenummer: 01110374.4
(22) Anmeldetag: 26.04.2001
(51) Int. Cl.: B64F 1/32

(54) **Rücklaufvorrichtung für Behälter**

(30) Priorität: 03.05.2000 DE 20007970 U; 06.10.2000 DE 10049972
(71) Anmelder: SAVOYE-SCHULZ GmbH, 42489 Wülfrath (DE)
(72) Erfinder: Heptner, Klaus, 40885 Ratingen (DE)
(74) Vertreter: Weisse, Jürgen, Dipl.-Phys.

(57) **Zusammenfassung**

Die Erfindung betrifft eine Rücklaufvorrichtung (12) zur Rückführung von Behältern. Die Rücklaufvorrichtung (12) besteht aus einem Stützgestell (24), einem an dem Stützgestell (24) vorgesehenen Führungsrahmen (34), wobei an dem Führungsrahmen (34) Rollen (40) bzw. Walzen (42) vorgesehen sind, über die die Behälter (44, 44a) geführt werden. Der Führungsrahmen (34) weist eine geeignete Schräge auf, um die Behälter (44, 44a) automatisch über die Rollen (40) bzw. Walzen (42) des Führungsrahmens (34) in eine bestimmte Richtung zu führen. Der Führungsrahmen (34) ist oberhalb eines Durchleuchtungsautomaten (10) zur Kontrolle von Gepäckstücken angeordnet.

## Beschreibung

### Technisches Gebiet

Die Erfindung betrifft eine Rücklaufvorrichtung zur Rückführung von Behältern, bestehend aus
a) einem Stützgestell,
b) einem an dem Stützgestell vorgesehenen Führungsrahmen, wobei
c) an dem Führungsrahmen Rollen bzw. Walzen vorgesehen sind, über die die Behälter geführt werden,
d) der Führungsrahmen eine geeignete Schräglage aufweist, um die Behälter automatisch über die Rollen bzw. Walzen des Führungsrahmens in eine bestimmte Richtung zu führen.

### Stand der Technik

Auf Flughäfen werden Flugpassagiere und deren Gepäck überprüft, ob sie sicherheitsrelevantes Gepäckgut, wie beispielsweise Waffen, dabei haben. Führt ein Passagier solche Gegenstände mit sich, kann er damit die Reise nicht antreten. Für die Überprüfung des Gepäcks werden sogenannte Durchleuchtungsautomaten verwendet. Das Gepäck wird, um es nicht zu beschädigen und um einen reibungslosen Transport zu gewährleisten, dazu in einen Behälter gelegt. Je nach Größe des Gepäckstücks wird als Behälter entweder eine Schale oder Wanne verwendet. Anschließend wird der Behälter mit einem elektrisch betriebenen Transportband in den Durchleuchtungsautomaten geführt. Ein Sicherheitsangestellter kann nun die Überprüfung des Gepäcks an einem Bildschirm vornehmen. Nach der Überprüfung wird der Behälter mit dem Gepäck wieder mittels Transportband aus dem Durchleuchtungsautomaten geführt. Das Gepäckstück kann nun von dem Passagier aus dem Behälter genommen werden. Die leeren Behälter müssen nun wieder zurückgeführt werden, um von weiteren Flugpassagieren für die Sicherheitsprüfung verwendet werden zu können.

Derzeit sind unterschiedliche Lösungen an Flughäfen im Einsatz. Die einfachste Lösung ist, wenn ein Flughafenangestellter die Behälter sammelt und sie bei einer ausreichenden Anzahl zurück bringt. Eine weitere Lösung besteht darin, daß beispielsweise ein waagerechtes Rollenband als Transporthilfe verwendet wird. Hierbei müssen die gesammelten oder einzelnen Behälter nicht mehr getragen werden, sondern werden über das waagerechte Rollenband lediglich geschoben.

Es sind auch Transportbänder bekannt, wie sie beispielsweise bei den beschriebenen Durchleuchtungsautomaten verwendet werden. Solche Transportbänder sind jedoch aufgrund der Motoren und der verbrauchten Energie nicht nur teuer, sondern auch umweltschädlich.

Weiterhin sind als Stand der Technik Rutschen beispielsweise bei der Paketsortierung und -beförderung der Post bekannt.

Alle bekannten Vorrichtungen zum Transport von Behältern bei Durchleuchtungsautomaten, wie sie auf Flughäfen zur Gepäckkontrolle zum Einsatz kommen, benötigen relativ viel Platz. Außerdem verbrauchen sie häufig durch elektrische Antriebsmotoren für Transportbänder elektrische Energie.

### Offenbarung der Erfindung

Aufgabe der Erfindung ist es daher, eine Rücklaufvorrichtung zur Rückführung von Behältern zu schaffen, die platz-, energiesparend, einfach, sowie kostengünstig ausgebildet ist.

Erfindungsgemäß wird die Aufgabe dadurch gelöst, daß bei einer Rücklaufvorrichtung zur Rückführung von Behältern der eingangs genannten Art e) das Stützgestell derart ausgebildet ist, daß der Führungsrahmen (34) oberhalb
eines Durchleuchtungsautomaten für Gepäckstücke angeordnet ist.

Die Erfindung beruht auf dem Prinzip, daß für den Transport der zurückzuführenden Behälter die umweltfreundliche Schwerkraft ausgenutzt wird. Hierdurch werden teure und energieverbrauchende Motoren, beispielsweise zum Betreiben eines Transportbandes, vermieden. Aus Gründen der Platzersparnis ist das Stützgestell derart ausgebildet, daß der Führungsrahmen oberhalb des Durchleuchtungsautomaten verläuft.

Als vorteilhafte Ausgestaltung der Erfindung hat sich erwiesen, wenn bei der erfindungsgemäßen Rücklaufvorrichtung zur Rückführung von Behältern an dem Stützgestell wenigstens zwei Führungsrahmen mit Rollen vorgesehen sind. Mehrere Führungsrahmen mit Rollen bewirken, daß auch mehr Behälter transportiert werden können. Eine weitere bevorzugte Ausführung ergibt sich, wenn bei der Rücklaufvorrichtung zur Rückführung von Behältern die Führungsrahmen unterschiedlichen Behältnissen angepaßt sind. Hierdurch können problemlos auch verschieden große Behälter über die Rücklaufvorrichtung geführt werden.

Da ggf. unterschiedliche Behälter über die Rollen des Führungsrahmens gleiten, wirkt sich die Schwerkraft und die Reibung verschieden aus. Während ein relativ geringer Neigungswinkel des Führungsrahmens für die großen Behälter bereits ausreicht, bleiben die kleineren Behälter oft noch stehen. Die kleineren Behälter benötigen in der Regel eine größere Schräglage des Führungsrahmens, damit sie - angetrieben durch die Schwerkraft - über die Rollen gleiten können. Damit auch kleinere Behälter über den Führungsrahmen gleiten können, kann es erforderlich sein, daß die Führungsrahmen unterschiedliche Schräglagen aufweisen. Hierdurch wird eine gleichmäßige Bewegung sowohl von größeren, als auch kleineren Behältnissen erzielt.

Um zu verhindern, daß die Behälter von alleine über das tiefer liegende Ende des Führungsrahmens gleiten, ist vorzugsweise an dem unteren Ende des Führungsrahmens eine Stopprolle vorgesehen. Über die Stopprolle kann bequem ein Behälter herübergeführt werden. Die Stopprolle befindet sich leicht über der Ebene, die durch die übrigen Rollen gebildet wird. Die Stopprolle ist in der Regel mit einem dämpfenden Material beschichtet, um unnötige Geräuschentwicklung zu vermeiden. Durch die Stopprolle läßt sich der Führungsrahmen als Lager für Behälter verwenden. Im Bedarfsfall wird ein Behälter über die Stopprolle geführt. Der nächste Behälter rutscht schließlich bis zur Stopprolle nach.

Auch zur Erleichterung der Aufnahme eines Behälters in die Rücklaufvorrichtung ist eine geeignete Aufnahmehilfen vorgesehen, die die Behälter in den Führungsrahmen führt. Diese Aufnahmehilfe besteht beispielsweise aus zwei Aufnahmehilferollen, die unterhalb der Ebene der übrigen Rollen angeordnet sind. Der Führungsrahmen weist dazu eine entsprechende Krümmung auf, an der die beiden Aufnahmehilferollen vorgesehen sind.

Vorteilhafterweise ist der Führungsrahmen der erfindungsgemäßen Rücklaufvorrichtung schienenartig ausgebildet. Hierdurch läßt sich der Führungsgrad für die Behälter erhöhen. Die Behälter laufen nur noch in einer definierten Art über den Führungsrahmen.

Um die Rücklaufvorrichtung zur Rückführung von Behältern an verschiedene Gegebenheiten, wie beispielsweise unterschiedlich große Durchleuchtungsapparate, anzupassen, ist in einer vorteilhaften Ausgestaltung der Erfindung der Führungsrahmen verstellbar an dem Stützgestell vorgesehen.

Zu Transportzwecken hat es sich als besonders günstig erwiesen, wenn die Rücklaufvorrichtung zur Rückführung von Behältern über einen modulartigen Aufbau verfügt.

Weitere Vorteile ergeben sich aus dem Gegenstand der Unteransprüche.

### Kurze Beschreibung der Zeichnung

- Fig. 1: zeigt in einer Seitenansicht die Prinzipskizze eines Durchleuchtungsautomaten für Gepäckstücke mit einer erfindungsgemäßen Rücklaufvorrichtung zur Rückführung von Behältern.
- Fig. 2: zeigt die andere Seitenansicht von Fig. 1.
- Fig. 3: zeigt in einer Hinteransicht im Schnitt A-A der Figuren 1 bzw. 2 die Prinzipskizze des Durchleuchtungsautomaten für Gepäckstücke mit der erfindungsgemäßen Rücklaufvorrichtung zur Rückführung von Behältern.
- Fig. 4: zeigt in einer Draufsicht die Prinzipskizze eines Durchleuchtungsautomaten für Gepäckstücke mit einer erfindungsgemäßen Rücklaufvorrichtung zur Rückführung von Behältern.

### Bevorzugtes Ausführungsbeispiel

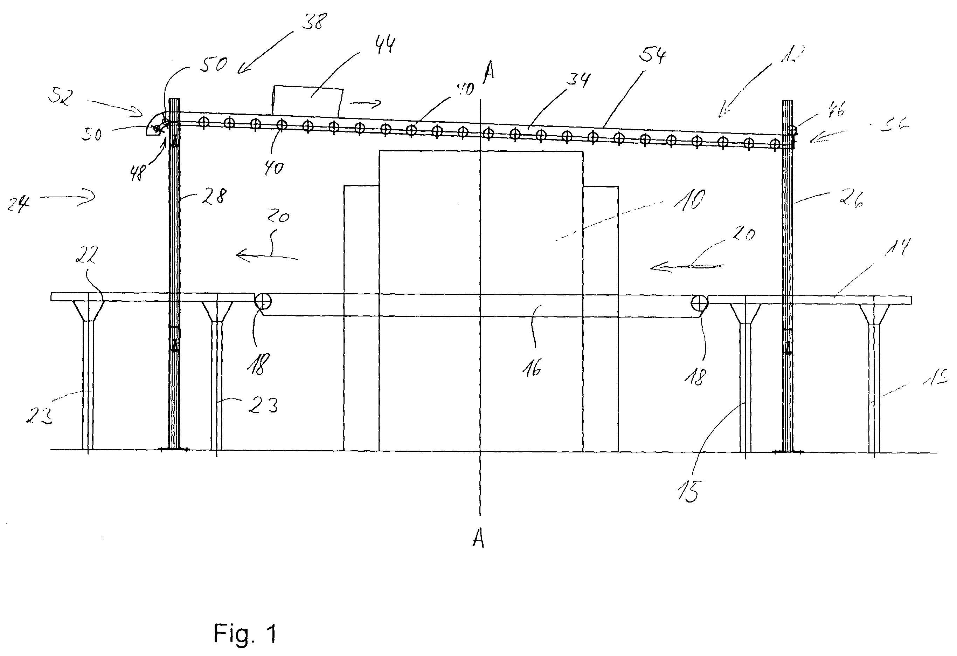

In Fig. 1 ist in einer Seitenansicht die Prinzipskizze eines Durchleuchtungsautomaten 10 für Gepäckstücke mit einer erfindungsgemäßen Rücklaufvorrichtung 12 zur Rückführung von Behältern dargestellt. Vor dem Durchleuchtungsautomaten 10 ist ein Tisch 14 mit Tischbeinen 15 vorgesehen, der an ein Transportband 16 anschließt, welches ein im folgenden nicht näher beschriebener Bestandteil des Durchleuchtungsautomaten 10 ist. Das Transportband 16 wird über Walzen 18 umgelenkt. Das Transportband 16 wird durch eine in dieser Ansicht von Fig. 1 nicht erkennbare Öffnung des Durchleuchtungsautomaten 10 geführt. Pfeile 20 zeigen die Richtung an, in die die Gepäckstücke durch den Durchleuchtungsautomaten 10 geführt werden. Am anderen Ende des Transportbandes 16 befindet sich ein weiterer Tisch 22 mit Tischbeinen 23.

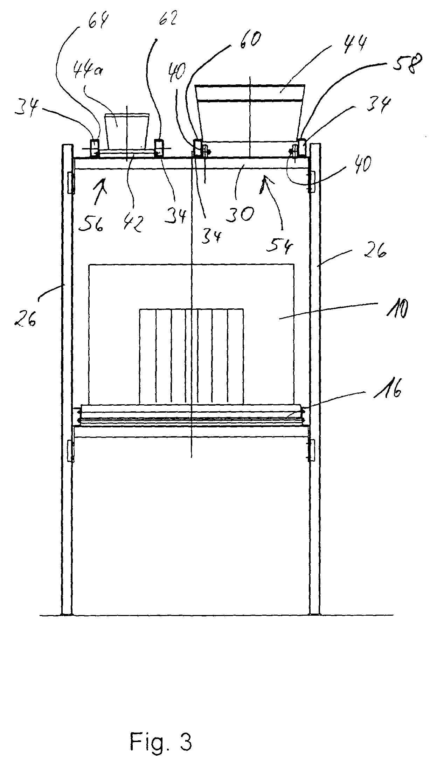

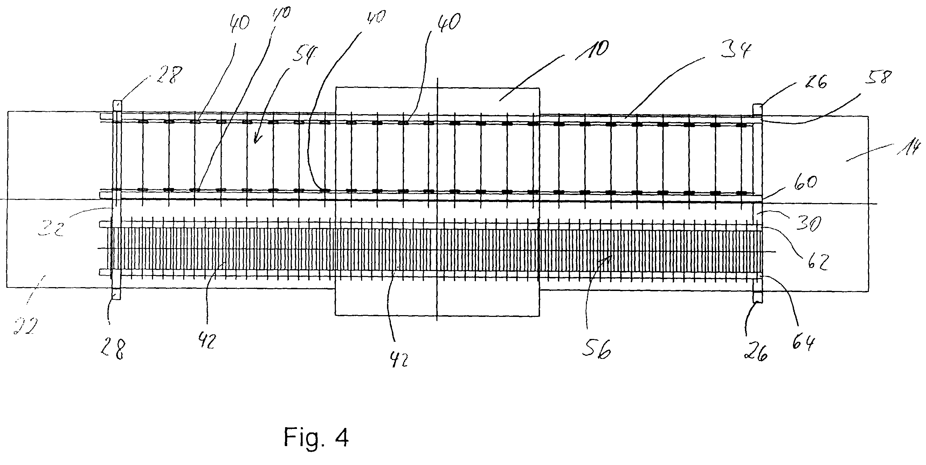

Die Rücklaufvorrichtung 12 besteht aus einem Stützgestell 24, von dem in Fig. 1 nur Stützstangen 26, 28 sichtbar sind. An den Stützstangen 26, 28 sind Querstangen 30, 32 (siehe hierzu Fig. 3 bzw. Fig. 4) angeordnet. Über den Querstangen 30, 32 ist ein Führungsrahmen 34 vorgesehen. Der Führungsrahmen 34 ist in vorliegendem Ausführungsbeispiel aus Gründen der Platzersparnis oberhalb des Durchleuchtungsautomaten 10 angeordnet. Weiterhin weist der Führungsrahmen 34 einen Neigungswinkel von etwa 4° auf. Das tiefer liegende Ende 36 befindet sich an den Stützstangen 26, also in Richtung Eingang des Durchleuchtungsautomaten 10. Das höher gelegene Ende 38 befindet sich an den Stützstangen 28.

In dem Führungsrahmen 34 sind in jeweils einer Ebene Rollen 40 bzw. Walzen 42 leicht drehbar gelagert angeordnet. In dieser Ansicht sind die angedeuteten Rollen 40 sichtbar. Ein Behälter 44 gleitet in dem Führungsrahmen 34 über die Rollen 40, der Schwerkraft folgend, zum tiefer liegenden Ende 36. Um zu verhindern, daß der Behälter 44 selbständig über das Ende des Führungsrahmens hinaus 34 gleitet, ist eine drehbar gelagerte Stopprolle 46 an dem Führungsrahmen 34 angebracht. Die Stopprolle 46 ist mit einer geräuschdämpfenden Schicht beschichtet, um unnötige Geräuschentwicklung zu vermeiden. Die Stopprolle 46 sitzt oberhalb der Ebene, die durch die Rollen 40 bzw. Walzen 42 gebildet wird.

Das höher liegende Ende des Führungsrahmens 34 ist nach unten hin gekrümmt. In der Krümmung 48 sitzen zwei Aufnahmehilferollen 50. Die Krümmung 48 des Führungsrahmens 34 und die darin sitzenden Aufnahmehilferollen 50 bilden zusammen eine Aufnahmehilfe 52. Hierdurch wird ein Einschieben des Behälters 44 von unten nach oben in den Führungsrahmen 34 erleichtert. Um an verschiedene Höhen und Winkel angepaßt werden zu können, sind sowohl die Stützstangen 26 und 28, als auch die Querstangen 30, 32 in ihrer Höhe verstellbar ausgebildet. Das Stützgestell 24, sowie der Führungsrahmen 34 sind modulartig aufgebaut, um so einen einfachen Transport zu ermöglichen. Entsprechende - nicht dargestellte - Steckverbindungen sind an den Querstangen 30, 32 und an den Stützstangen 26, 28 vorgesehen.

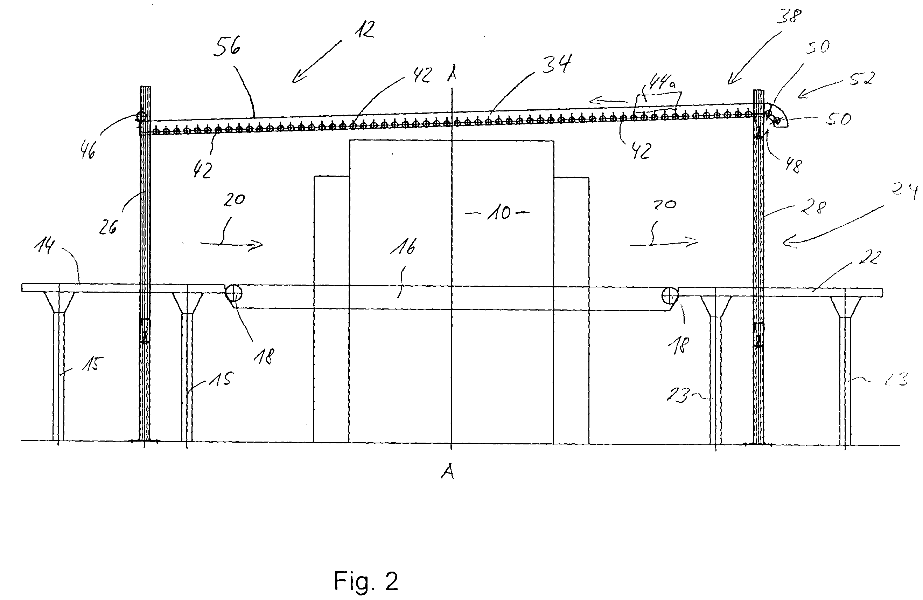

In Fig. 2 ist die Prinzipskizze des Durchleuchtungsautomaten 10 für Gepäckstücke mit der erfindungsgemäßen Rücklaufvorrichtung 12 zur Rückführung von Behältern aus Fig. 1 dargestellt. Gleiche Bestandteile haben entsprechende Bezugszeichen. Bei vorliegendem Ausführungsbeispiel ist der Führungsrahmen 34 in zwei Abschnitte 54, 56 unterteilt, wie es in den Figuren 3 und 4 deutlicher zu sehen ist. Die unterschiedlichen Abschnitte 54, 56 dienen zur Aufnahme von unterschiedlichen Behältern 44 bzw. 44a. Von der Seite, die in Fig. 2 zu sehen ist, ist der Abschnitt 56 für kleine Behälter 44a ausgelegt. Entsprechend ist von der Seite in Fig. 1 der Abschnitt 56 für die Aufnahme von größeren Behältern 44 vorgesehen. Der Abschnitt 54 des Führungsrahmens 34 weist daher weiter auseinander stehende Rollen 40 auf, während im Abschnitt 56 eng beieinander sitzende Walzen 42 montiert sind.

Fig. 3 zeigt in einer Hinteransicht im Schnitt A-A der Figuren 1 bzw. 2 die Prinzipskizze des Durchleuchtungsautomaten 10 für Gepäckstücke mit der erfindungsgemäßen Rücklaufvorrichtung 12 zur Rückführung von Behältern 44, 44a. In dieser Fig. 3 werden die unterschiedlichen Abschnitte 54, 56 für verschieden große Behälter 44, 44a besonders deutlich. Der Führungsrahmen 34 ist derart schienenartig ausgebildet, daß in Abschnitt 54 jeweils an Stegen 58, 60 des Führungsrahmens 34 Rollen 40 angebracht sind. Im Abschnitt 56 sind kleinere Walzen 42 zwischen Stegen 62, 64 des Führungsrahmens 34 gelagert. In Abschnitt 54 laufen die größeren Behälter 44 nun über die gegenüberstehenden Rollen 40, während in Abschnitt 56 des Führungsrahmens die etwas kleineren Behälter 44a über Walzen 42 bewegt werden.

Fig. 4 zeigt in einer Draufsicht die Prinzipskizze der Figuren 1 bis 3 des Durchleuchtungsautomaten 10 für Gepäckstücke mit der erfindungsgemäßen Rücklaufvorrichtung 12 zur Rückführung von Behältern 44, 44a. Gleiche Bestandteile haben entsprechend gleiche Bezugszeichen. In dieser Perspektive werden die unterschiedlichen Abschnitte 54, 56 des Führungsrahmens besonders deutlich. Die Anordnung der Walzen 42 ist sichtbar erheblich enger vorgesehen, als es bei den Rollen 40 erforderlich ist.

## Patentansprüche

1. Rücklaufvorrichtung (12) zur Rückführung von Behältern (44, 44a), bestehend aus
a) einem Stützgestell (24),
b) einem an dem Stützgestell (24) vorgesehenen Führungsrahmen (34), wobei
c) an dem Führungsrahmen (34) Rollen (40) bzw. Walzen (42) vorgesehen sind, über die die Behälter (44, 44a) geführt werden,
d) der Führungsrahmen (34) eine geeignete Schräglage aufweist, um die Behälter (44, 44a) automatisch über die Rollen (40) bzw. Walzen (42) des Führungsrahmens (34) in eine bestimmte Richtung zu führen.
**dadurch gekennzeichnet, daß**
e) das Stützgestell (24) derart ausgebildet ist, daß der Führungsrahmen (34) oberhalb eines Durchleuchtungsautomaten (10) für Gepäckstücke angeordnet ist.

2. Rücklaufvorrichtung (12) zur Rückführung von Behältern (44, 44a) nach Anspruch 1, **dadurch gekennzeichnet, daß** wenigstens zwei Führungsrahmen (12) oder Abschnitte (54, 56) mit Rollen (40) bzw. Walzen (42) an dem Stützgestell (24) vorgesehen sind.

3. Rücklaufvorrichtung (12) zur Rückführung von Behältern (44, 44a) nach Anspruch 2, **dadurch gekennzeichnet, daß** die Führungsrahmen (34) unterschiedlichen Behältnissen (44, 44a) angepaßt sind.

4. Rücklaufvorrichtung (12) zur Rückführung von Behältern (44, 44a) nach einem der Ansprüche 1 bis 3, **dadurch gekennzeichnet, daß** die Führungsrahmen (34) unterschiedliche Schräglagen aufweisen.

5. Rücklaufvorrichtung (12) zur Rückführung von Behältern (44, 44a) nach einem der Ansprüche 1 bis 4, **dadurch gekennzeichnet, daß** an dem tiefer gelegenem Ende des Führungsrahmens (34) eine Stopprolle (46) vorgesehen ist.

6. Rücklaufvorrichtung (12) zur Rückführung von Behältern (44, 44a) nach einem der Ansprüche 1 bis 5, **dadurch gekennzeichnet, daß daß** an dem oberen Ende des Führungsrahmens (34) eine Aufnahmehilfe (52) vorgesehen ist, die die Behälter (44, 44a) in den Führungsrahmen (34) führt.

7. Rücklaufvorrichtung (12) zur Rückführung von Behältern (44, 44a) nach einem der Ansprüche 1 bis 6, **dadurch gekennzeichnet,** der Führungsrahmen schienenartig ausgebildet ist.

8. Rücklaufvorrichtung (12) zur Rückführung von Behältern (44, 44a) nach einem der Ansprüche 1 bis 7, **dadurch gekennzeichnet, daß** der Führungsrahmen (34) verstellbar an dem Stützgestell (24) vorgesehen ist.

9. Rücklaufvorrichtung (12) zur Rückführung von Behältern (44, 44a) nach einem der Ansprüche 1 bis 8, **gekennzeichnet durch** einen modulartigen Aufbau.
